# EUROPEAN PATENT SPECIFICATION

(11) **EP 2 719 805 B1**
(45) Date of publication and mention of the grant of the patent: **22.08.2018**
(21) Application number: 12796135.7
(22) Date of filing: 30.05.2012
(51) Int. Cl.: D04H 3/045, B32B 5/26, D04H 1/559, D04H 1/74, D04H 3/14, B29D 28/00, D04H 13/02, B65D 65/38

(54) **PACKAGING MATERIAL**
VERPACKUNGSMATERIAL
MATÉRIAUX D'EMBALLAGE

(30) Priority: 07.06.2011 JP 2011126874
(43) Date of publication of application: 16.04.2014
(73) Proprietor: JX Nippon Oil & Energy Corporation, Chiyoda-ku Tokyo 100-8162 (JP)
(72) Inventor: NAKAZAWA, Shigehisa, Tokyo 100-8162 (JP); TSURUTA, Yuji, Tokyo 100-8162 (JP)
(74) Representative: Nowlan, Elke Ursula
(86) International application number: PCT/JP2012/063862
(87) International publication number: WO 2012/169394

(56) References cited:
- EP-A1- 1 038 654
- DE-A1- 4 137 310
- GB-A- 1 387 701
- GB-A- 2 108 045
- JP-A- 10 309 789
- JP-A- 11 156 986
- JP-A- H07 315 391
- JP-A- 2001 311 213
- JP-A- 2002 144 451
- JP-A- 2002 337 282
- JP-A- 2004 009 510
- JP-A- 2004 351 859
- JP-A- 2006 008 205
- JP-A- 2006 187 256
- US-A- 4 546 029

## Description

### TECHNICAL FIELD

The present invention relates to packaging material according to claim 1 formed of a mesh body including uniaxially oriented bodies made of a thermoplastic resin laminated crosswise or woven so that their orientation axes cross each other, and relates to a method for producing such a mesh body.

### BACKGROUND ART

Patent Document 1 discloses a method for producing a mesh body (mesh-form nonwoven fabric) including a uniaxially oriented body (longitudinal web) made of a thermoplastic resin oriented in a longitudinal direction (length direction) laminated with a uniaxially oriented body (lateral web) made of a thermoplastic resin oriented in a lateral direction (width direction). In this method for producing a mesh body, a longitudinal web and a lateral web, that have been formed individually, are pressed and heated in a state in which they are laminated, to integrate the longitudinal web and the lateral web.

### CITATION LIST

### PATENT DOCUMENT

Patent Document 1: Japanese Patent No. 2983584

### SUMMARY OF THE INVENTION

### PROBLEMS TO BE SOLVED BY THE INVENTION

Moreover, a mesh body disclosed in Patent Document 1 can be air permeability and transparent, and thus, can be employed as a packing material for packing food products such as vegetables or fruits. For this reason, in the process for producing such a mesh body, at the time of the pressing, for example, the longitudinal web and the lateral web are guided between a pair of mirror surface rolls to apply a nip pressure to them so that they are surface-bonded and integrated with each other, to thereby ensure a strength (particularly, peeling strength) as a packing material.

However, when the press is carried out by employing mirror surface rolls, surfaces of the mesh body are smoothened and the mesh body has gloss (glaze). Accordingly, when a mesh body having gloss is used as a packing material for food products, light reflected by the mesh body becomes relatively intense, and as result, there has been a problem that visibility is reduced of the food products that are the objects to be packed.

Therefore, taking the above-described existing problems into consideration, it is an object of the present invention to ensure the strength of mesh bodies, and to suppress decrease of visibility of objects that are packed due to gloss of mesh bodies.

### MEANS FOR SOLVING THE PROBLEMS

In order to achieve the object, the method for producing a mesh body includes the steps of: laminating crosswise or weaving uniaxially oriented bodies made of a thermoplastic resin so that their orientation axes cross each other, and surface-bonding contact portions of adjacent uniaxially oriented bodies to form a mesh body; and applying a surface-roughening processing to a surface of the mesh body.

Further, the packaging material defined in claim 1 according to the present invention is formed from a mesh body which includes uniaxially oriented bodies made of a thermoplastic resin laminated crosswise or woven so that their orientation axes cross each other, and the mesh body further includes surface-bonded portions formed by surface-bonding contact portions of adjacent uniaxially oriented bodies, and concavoconvex portions formed on a surface of the mesh body by a surface-roughening processing.

### EFFECTS OF THE INVENTION

According to the present invention, by surface-bonding contact portions of adjacent uniaxially oriented bodies to form a mesh body, it is possible to maximize bonding area of these uniaxially oriented bodies, to thereby ensure a sufficient strength of the mesh body.

Further, according to the present invention, by applying a surface-roughening processing to surfaces of a mesh body, it is possible to suppress gloss of the mesh body to thereby suppress decrease of visibility of an object to be packed when the mesh body is employed as a packing material.

### BRIEF DESCRIPTION OF THE DRAWINGS

Fig. 1A is a schematic configuration view of a split web constituting a first example of a mesh body of a first embodiment of the present invention.
Fig. 1B is an enlarged perspective view of the B portion of Fig. 1A.
Fig. 2A is a schematic configuration view of a slit web constituting a first example of the mesh body of the above embodiment.
Fig. 2B is an enlarged schematic view of the B portion of Fig. 2A.
Fig. 3 is a schematic configuration view of a uniaxially oriented tape constituting a second example and a third example of the mesh body of the above embodiment.
Fig. 4 is a partial plan view schematically showing the construction of a nonwoven fabric being the first example of the mesh body of the above embodiment.
Fig. 5 is a partial plan view schematically showing the construction of a nonwoven fabric being the second example of the mesh body of the above embodiment.
Fig. 6 is a partial plan view schematically showing the construction of a woven fabric being the third example of the mesh body of the above embodiment.
Fig. 7 is a view showing a method for producing the split web of the above embodiment.
Fig. 8 is a view showing a first example the method for producing a mesh body of the above embodiment.
Fig. 9 is a view showing a second example the method for producing a mesh body of the above embodiment.
Fig. 10 is a view showing an embossing processing step in the above embodiment.
Fig. 11A is a view showing a nonwoven fabric before the embossing processing.
Fig. 11B is a view showing a nonwoven fabric after the embossing processing.
Figs. 12A and 12B are views showing a packing bag formed by a nonwoven fabric not subjected to embossing processing and a packing bag formed by a nonwoven fabric subjected to an embossing processing.

### MODES OF CARRING OUT THE INVENTION

Hereinafter, embodiments of the present invention will be described with reference to the drawings.

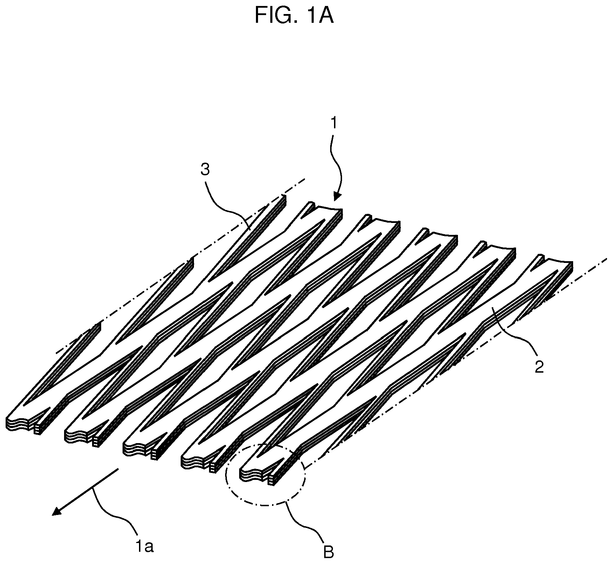

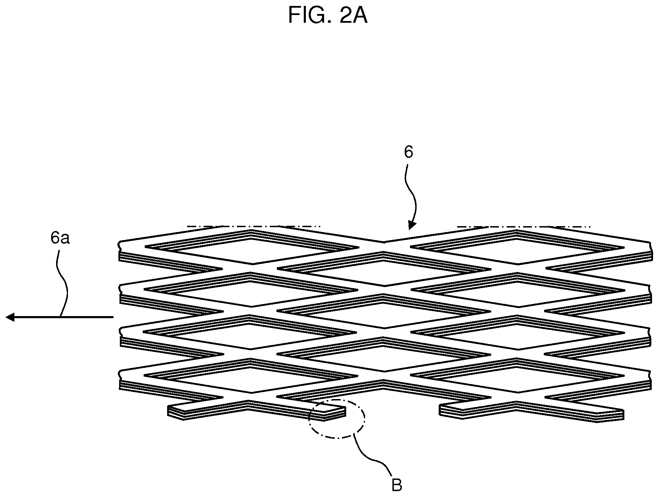

Figs. 1A and 2A show a uniaxially oriented body constituting a mesh body of a first embodiment of the present invention.

A split web 1 shown in Fig. 1A corresponds to the uniaxially oriented body made of a thermoplastic resin of the present invention, and the split web 1 is formed by uniaxially stretching a film made of a thermoplastic resin in the longitudinal direction (axial direction of an orientation axis 1a of a split web 1), splitting the film in the longitudinal direction, and extending the film in the width direction. In more detail, the split web 1 is formed by employing a first thermoplastic resin and a second thermoplastic resin having a melting point lower than that of the first thermoplastic resin, forming these resins into a multilayer film of at least two layers (three layers in Fig. 1A) by using a forming method such as a multilayer inflation method or a multilayer T-die method, stretching the multilayer film in the longitudinal direction (length direction), forming splits of the film (split treatment) in a catch stitch form in the longitudinal direction by using a slitter to form a mesh-form film, and further extending the film in the width direction to have a predetermined width. Furthermore, the split web 1 has relatively high strength in the longitudinal direction over the entire width. Here, Symbol 2 in Fig. 1A corresponds to a main fiber, and Symbol 3 corresponds to a branch fiber.

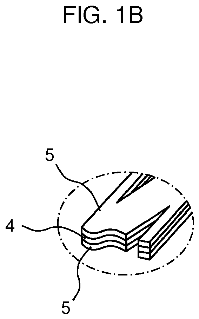

Fig. 1B is an enlarged perspective view of the B portion of Fig. 1A. In Fig. 1B, the split web 1 has a three-layer structure including a layer 4 of a first thermoplastic resin and layers 5 of a second thermoplastic resin laminated on respective sides of the layer 4. The layers 5 of the second thermoplastic resin can function as bonding layers to bond webs when the split web 1 is laminated crosswise with a slit web 6, to be described later, at a time of forming a nonwoven fabric 8 (first example of mesh body), to be described later. Here, as the first thermoplastic resin, e.g., polyethylene may be mentioned. Further, as the second thermoplastic resin having a melting point lower than that of the first thermoplastic resin, for example, polyethylene may be mentioned.

A slit web 6 shown in Fig. 2A corresponds to the uniaxially oriented body made of a thermoplastic resin of the present invention. The slit web 6 is formed by forming many slits in the lateral direction in a thermoplastic resin film (axial direction of an orientation axis 6a of the slit web 6), and uniaxially stretching the film in the lateral direction. In more detail, the slit web 6 is formed by forming parallel intermittent slits in a catch stitch form and the like by, for example, a heated blade in the lateral direction (width direction) in a portion of the multi-layer film other than both ear portions, and uniaxially stretching the film in the lateral direction. Furthermore, the slit web 6 has relatively high strength in the lateral direction.

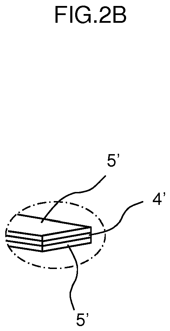

Fig. 2B is an enlarged perspective view of the B portion of Fig. 2A. In Fig. 2B, the slit web 6 has a three-layer structure including a layer 4' of a first thermoplastic resin and layers 5' of a second thermoplastic resin laminated on respective sides of the layer 4'. The layers 5' of the second thermoplastic resin can function as bonding layers to bond webs when the slit web 6 is laminated crosswise with a split web 1 at a time of forming a nonwoven fabric 8 (first example of mesh body), to be described later.

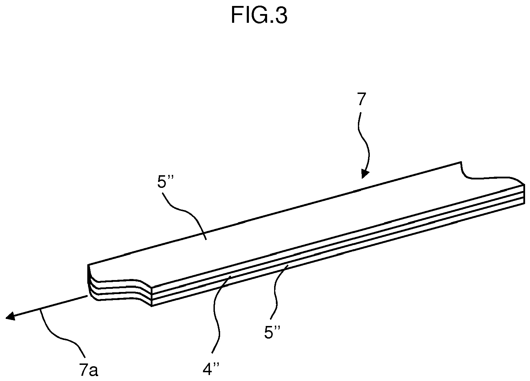

Fig. 3 shows a uniaxially oriented body constituting second and third examples of the mesh body of this embodiment.

A uniaxially oriented tape 7 shown in Fig. 3 corresponds to the uniaxially oriented body made of a thermoplastic resin of the present invention. The uniaxially oriented tape 7 is a multi-layer stretched tape produced by employing a first thermoplastic resin and a second thermoplastic resin having a melting point lower than that of the first thermoplastic resin, forming these resins into a multilayer film of at least two layers (three layers in Fig. 3) by using a forming method such as a multilayer inflation method or a multilayer T-die method, uniaxially orienting the multilayer film in the longitudinal direction or the lateral direction, and cutting the film into the multi-layer stretched tape. In the same manner as the split web 1 and the slit web 6, the uniaxially oriented tape 7 shown in Fig. 3 has a three-layer structure including a layer 4" of a first thermoplastic resin and layers 5" of a second thermoplastic resin laminated on respective sides of the layer 4". The layers 5" of the second thermoplastic resin can function as bonding layers to bond tapes when the uniaxially oriented tapes 7 are laminated crosswise with each other at a time of forming a nonwoven fabric 9 (second example of mesh body) to be described later. Furthermore, the layers 5" of the second thermoplastic resin can function as bonding layers to bond tapes at a time of weaving the uniaxially oriented tapes 7 at a time of forming a woven fabric 10 (third example of mesh body) to be described later. Here, Symbol 7a in Fig. 3 corresponds to an orientation axis of the uniaxially oriented tape 7.

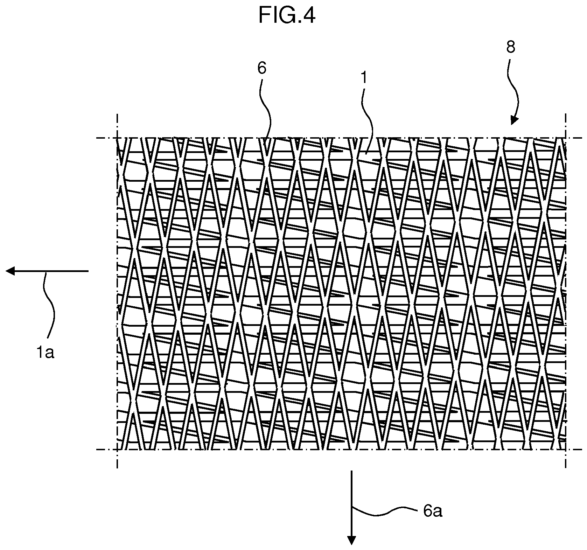

Figs. 4 to 6 show three examples (first to third examples of the above mesh body) of mesh body of this embodiment before surface-roughening processing.

Fig. 4 shows a nonwoven fabric 8 being the first example of a mesh body of this embodiment. The nonwoven fabric 8 is formed by laminating crosswise the split web 1 and the slit web 6. In the nonwoven fabric 8, they are laminated crosswise so that the orientation axis 1a of the split web 1 and the orientation axis 6a of the slit web 6 cross perpendicularly to each other. Furthermore, in the nonwoven fabric 8, contact portions of adjacent split web 1 and slit web 6 are surface-bonded to each other. Here, as a specific example of the nonwoven fabric 8, Warifu (registered trademark, manufactured by JX Nippon ANCI Corporation) may be mentioned.

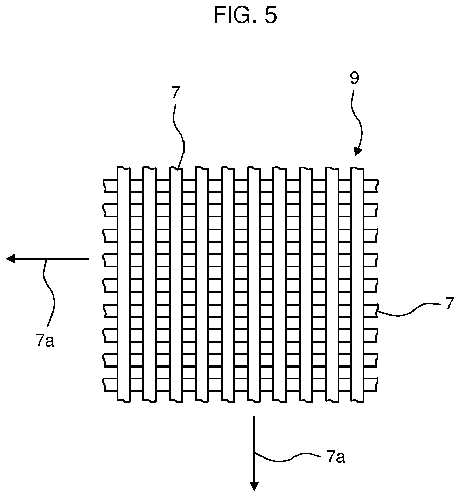

Fig. 5 shows a nonwoven fabric 9 being a second example of a mesh body of this embodiment. The nonwoven fabric 9 is formed by laminating two groups each including uniaxially oriented tapes 7 arranged in parallel. In the nonwoven fabric 9, the groups are laminated crosswise so that the orientation axis 7a of the uniaxially-oriented tapes 7 of one group crosses perpendicularly the orientation axis 7a of the uniaxially oriented tapes 7 of the other group. Furthermore, in the nonwoven fabric 9, contact portions of adjacent and crossing uniaxially oriented tapes 7 are surface-bonded.

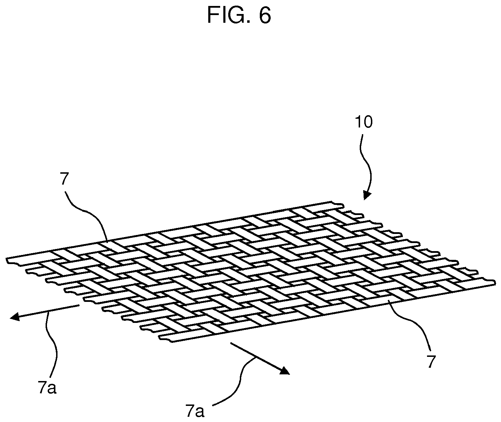

Fig. 6 shows a woven fabric 10 being a third example of a mesh body of this embodiment. The woven fabric 10 is formed by weaving the uniaxially oriented tapes 7. In the woven fabric 10, the uniaxially oriented tapes 7 cross perpendicularly to each other, and accordingly, their orientation axes 7a are perpendicular to each other. Furthermore, in the woven fabric 10, contact portions of adjacent and crossing uniaxially oriented tapes 7 are surface-bonded.

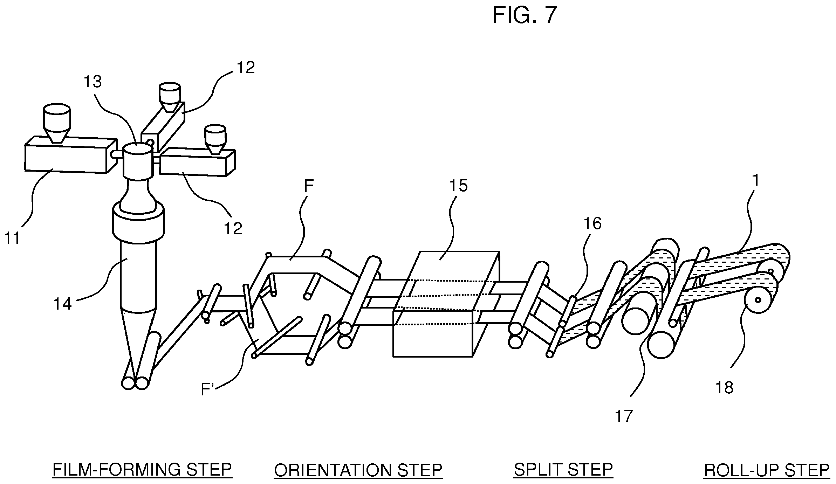

Next, an example of the method for producing the uniaxially oriented body of this embodiment will be described with reference to Fig. 7.

Fig. 7 schematically illustrates an example of the method for producing the split web 1 that is the uniaxially oriented body.

As illustrated in Fig. 7, the split web 1 is produced through, as main steps, (1) a film-forming step of forming a multi-layer film, (2) an orientation step of orienting the multi-layer film, (3) a split step of splitting the oriented multi-layer film in parallel to an orientation axis, and (4) a roll-up step of rolling-up the split film.

Hereinbelow, each of the steps will be explained. In Fig. 7, in the (1) film-forming step of forming a multi-layer film, a first thermoplastic resin is supplied to a main extruder 11, a second thermoplastic resin is supplied to two sub extruders 12, 12, and using the first thermoplastic resin extruded from the main extruder 11 as a center layer (oriented layer) and the second thermoplastic resin extruded from the two sub extruders 12, 12 as inner and outer layers, an inflation-forming is carried out to produce a tubular multi-layer film. Here, Fig. 7 shows a case of carrying out a film-forming by using three extruders, extruding the resin downwardly through a multi-layer tubular die 13, and using a water-cooled inflation 14.

In the (2) orientation step, the tubular multi-layer film formed above is split up into two films F, F', and while they are conveyed through an oven 15 provided with an infrared heater, a hot air supplier, and the like to be thereby heated to a predetermined temperature, a roll orientation is carried out with a predetermined orientation magnification with respect to an initial dimension.

In the (3) split (slit) step, the oriented multi-layer film is made to slide-contact with a splitter (rotating blade) 16 rotating at a high speed to carry out a split treatment (splitting).

A split web 1 formed by the spitting is extended in the width direction to have a predetermined width, subjected to a heat treatment in a heat treatment unit 17, and rolled up in the (4) roll-up step to be a rolled body 18 of a predetermined length of the split web 1.

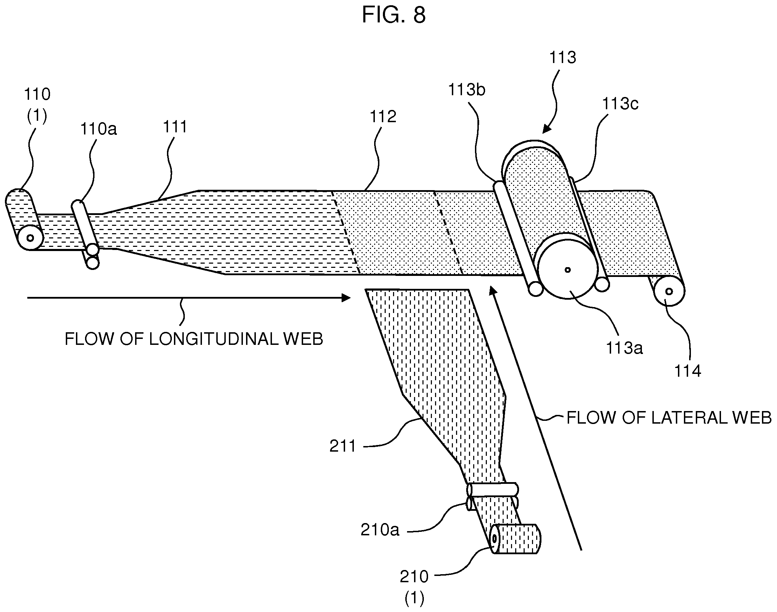

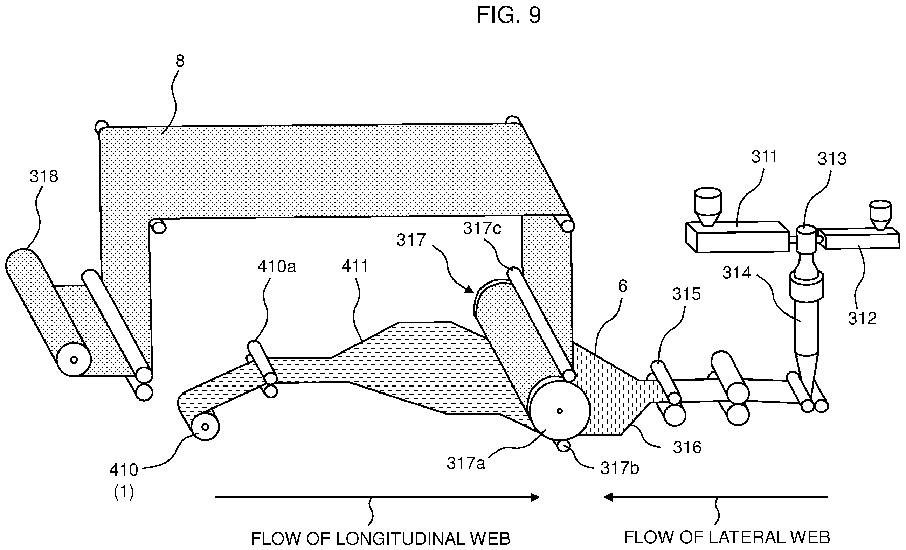

Next, two examples of the method for producing a mesh body of this embodiment will be described with reference to Figs. 8 and 9.

Fig. 8 illustrates, as a first example of the method for producing a nonwoven fabric formed by laminating two split webs 1.

In Fig. 8, a split web 110 (longitudinal web) produced in the manner illustrated in Fig. 7 is rolled out from an original-cloth roll-out roll 110a, fed at a predetermined feeding speed to a width-extending step 111 to extend the width to several times by a width-extender (not illustrated), and subjected to a heat treatment as the case requires. Another split web 210 (lateral web) is rolled out from an original-cloth roll-out roll 210a, fed at a predetermined feeding speed to a width-extending step 211 to extend the width to several times by a width-extender (not illustrated), and subjected to a heat treatment as the case requires, and thereafter, cut into a length equal to the width of the longitudinal web, and supplied from a direction perpendicular to the film-feeding direction of the longitudinal web. In a lamination step 112, the webs are laminated crosswise via a bonding layer (second thermoplastic resin layer 5) so that orientation axes of respective webs cross perpendicularly to each other. In a thermo-compression bonding step 113, the longitudinal web and the lateral web, that have been laminated crosswise, are fed between a hot cylinder 113a of which the circumferential surface is a mirror surface and mirror surface rolls 113b, 113c to be applied with a nip pressure. Consequently, the longitudinal web and the lateral web are thermally press-bonded to each other to be integrated. Furthermore, contact portions of adjacent longitudinal web and lateral web are entirely surface-bonded. The integrated longitudinal web and the lateral web are rolled in in a roll-up step to form a rolled body 114 of crosswise laminated nonwoven fabric.

Here, in Fig. 8, instead of split webs 110 and 210, it is also possible to convey the woven fabric 10 to the thermo-compression bonding step 113 and guide the woven fabric 10 between the hot cylinder 113a and mirror-surface rolls 111b, 113c to apply a nip pressure. In this case, by applying a nip pressure to the woven fabric 10, uniaxially oriented tapes 7 constituting the woven fabric 10 thermo-compression-bonded to be integrated. Furthermore, contact portions of adjacent and crossing uniaxially oriented tapes 7 are entirely surface-bonded.

Fig. 9 shows, as a second example of the method for producing a mesh body, a method for producing a nonwoven fabric 8 that is a lamination of a split web 1 and a slit web 6.

The method for producing such a nonwoven fabric 8 includes, as main steps, (1) a film-forming step of forming a multilayer film, (2) a slit step of carrying out a slit treatment in a direction perpendicular to the longitudinal direction of the multilayer film, (3) an orientation step of the multilayer film, and (4) a compression bonding step of laminating a lateral web (slit web 6) and a longitudinal web (split web 1) and thermo-compression bonding them.

Each of the steps will be described below. In Fig. 9, in the (1) film-forming step of forming a multilayer film, a first thermoplastic resin is supplied to a main extruder 311, a second thermoplastic resin is supplied to a sub extruder 312, and using the first thermoplastic resin extruded from the main extruder 311 as an inner layer and the second thermoplastic resin extruded from the sub extruder 312 as an outer layer, an inflation-forming is carried out to produce a tubular two-layer film. Here, Fig. 9 shows a case of carrying out a film-forming by using two extruders, extruding the resin downwardly through a multi-layer tubular die 313, and using a water-cooled inflation 314.

In the (2) slit step, the formed tubular two-layer film is pinched to be flattened, and subsequently fine-oriented by rolling to be a three-layer film, and the three-layer film is subjected to a lateral slit step 315 to form lateral slits in the film in a direction perpendicular to a feeding direction of the film in a catch-stitch form.

In the (3) orientation step, lateral orientation is applied in a lateral orientation step 316 to the film to which the slit treatment has been applied. A slit web 6 (lateral web) thus obtained is conveyed to the (4) thermo-compression step 317.

Meanwhile, a split web 410 (longitudinal web) is rolled out from an original cloth roll-out roll 410a in the same manner as the longitudinal web of Fig. 8, the web is fed at a predetermined feeding speed to a width-extending step 411 to extend the width to several times by a width-extender (not illustrated), and subjected to a heat treatment as the case requires. Thereafter, the longitudinal web is fed to a thermo-compression bonding step 317, in which the longitudinal web and the lateral web are laminated so that orientation axes of respective webs cross perpendicularly to each other and thermo-compression bonded. Specifically, the webs are fed between a hot cylinder 317a of which the circumferential surface is a mirror surface and mirror surface rolls 317b, 317c to apply a nip pressure to thereby thermo-compression bond them to each other to integrate them. Consequently, contact portions of adjacent longitudinal and lateral webs are entirely surface-bonded. An integration of the longitudinal and lateral webs thus produced is conveyed to a roll-up step to be rolled up into a rolled body 318 of nonwoven fabric 8.

In this embodiment, to the abovementioned mesh body (each of the nonwoven fabrics shown in Figs. 4 and 5, the woven fabric shown in Fig. 6 and the nonwoven fabrics produced by the production methods illustrated in Figs. 8 and 9), as a surface-roughening processing, an embossing processing is applied. In the following, explanation will be made with respect to a nonwoven fabric 8 as an example of a mesh body to which an embossing processing is applied.

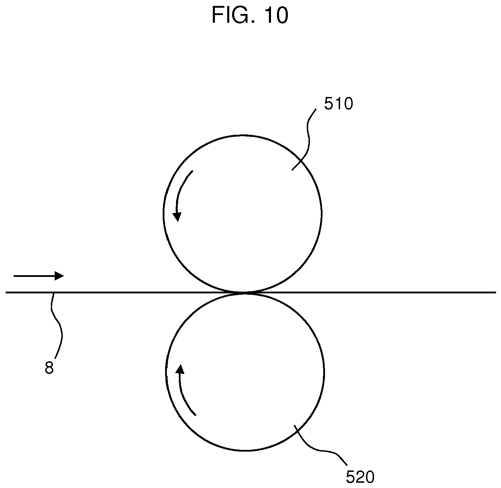

Fig. 10 is a view illustrating an embossing processing step in this embodiment.

An embossing roll 510 has a plurality of circular convex portions (not illustrated) on its surface. Furthermore, the embossing roll 510 is heated to a temperature (for example, about 100 degrees Celsius) at which the nonwoven fabric 8 can be softened.

Under the embossing roll 510, a rubber roll 520 is provided, which functions as a receiving roll for the embossing roll.

In the embossing processing step, the nonwoven fabric 8 is guided between the embossing roll 510 and the rubber roll 520, and thereby applied with a nip pressure by these rolls. While the nip pressure is applied to the nonwoven fabric 8, circular concave portions are formed on a surface of the nonwoven fabric 8 by the circular convex portions of the embossing roll 510. Here, the circular concave portions formed on the surface of the nonwoven fabric 8 correspond to "concavoconvex portions formed on a surface of a mesh body by a surface-roughening processing".

Here, in the methods for producing a mesh body illustrated in Figs. 8 and 9, the embossing processing step can be inserted between the thermo-compression bonding step and the roll-up step or at an any timing after the roll-up step.

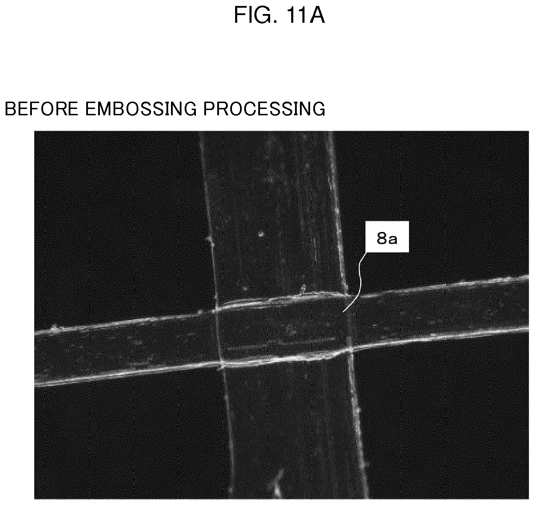

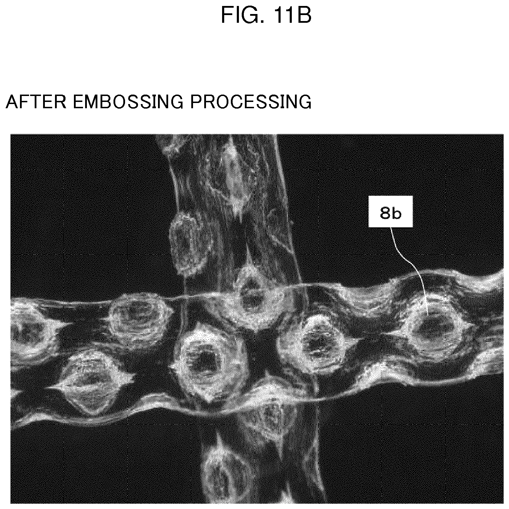

Fig. 11A is an enlarged view of a nonwoven fabric 8 before the embossing processing. Fig. 11B is an enlarged view of a nonwoven fabric 8 after the embossing processing.

Fig. 11A shows a surface-bonded portion 8a formed by surface-bonding contact portions of a split web 1 and a slit web 6.

Fig. 11B shows circular convex portions 8b formed on a surface of the nonwoven fabric 8 by an embossing processing. The concave portions 8b are formed over the entire surface of the nonwoven fabric 8, so that gloss of the nonwoven fabric 8 is reduced.

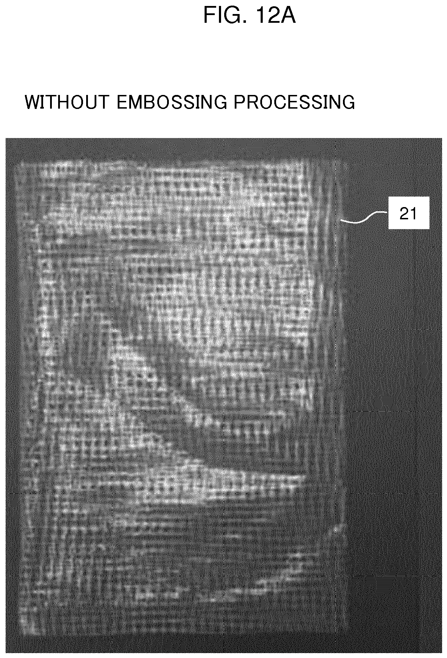

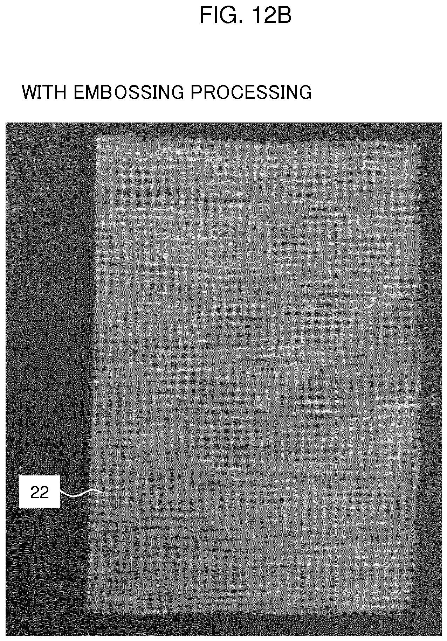

Fig. 12A shows a packing bag 21 formed of a nonwoven fabric 8 to which no embossing processing has been applied. Furthermore, Fig. 12B shows a packing bag 22 formed by a nonwoven fabric 8 to which an embossing processing has been applied.

When the packing bag 21 and the packing bag 22 are compared, gloss of the packing bag 22 is reduced as compared with the packing bag 21. Accordingly, by applying an embossing processing, gloss of the packing bag is reduced, and accordingly, it is possible to improve visibility of an object that is packed in the packing bag.

Japanese Laid-open Patent Application Publication No. H11-302961 describes a so-called thermo embossing bonding method as a method for integrating a plurality of uniaxially oriented bodies. In such a bonding method, for example, by using the embossing roll 510 and the rubber roll 520 illustrated in Fig. 10, convex portions of a heated embossing roll 510 are pressed against an object to be bonded (laminate of a plurality of uniaxially oriented bodies) to thermo-compression bond the object to be bonded.

However, in the case of thermo-compression bonding an object to be bonded by using the thermo embossing bonding method, on portions to which convex portions of the embossing roll 510 do not contact, no thermo-compressing bonding takes place. Accordingly, in the thermo embossing bonding method, among contact portions of adjacent uniaxially oriented bodies, non-bonded portions may be present, and as a result, there is a possibility that a mesh body may not have sufficient strength (particularly, peeling strength).

In this respect, in this embodiment, an object to be bonded is guided between a hot cylinder and a mirror roll to apply a nip pressure to the object to be bonded to thereby thermo-compression bond the object to be bonded. Accordingly, since contact portions of adjacent uniaxially oriented bodies are entirely surface-bonded, a mesh body can have a sufficient strength (particularly, peeling strength).

In this embodiment, with respect to uniaxially oriented bodies constituting a mesh body (each of the nonwoven fabrics shown in Figs. 4 and 5, the woven fabric shown in Fig. 6 and the nonwoven fabrics produced by the production methods illustrated in Figs. 8 and 9), contact portions of adjacent uniaxially oriented bodies are surface-bonded. Accordingly, it is possible to maximize the bonding area of these uniaxially oriented bodies to thereby have a sufficient strength of a mesh body.

Furthermore, in this embodiment, by applying an embossing processing to a surface of a mesh body, it is possible to reduce gloss of a mesh body, and accordingly, it is possible to reduce reduction of visibility of an object that is packed when the mesh body is used as a packing material.

Here, in this embodiment, explanation has been made with respect to a case in which each convex portion of the embossing roll is circular, but the shape of the convex portion is not limited thereto and it may, for example, be rectangular or elliptical.

Furthermore, in this embodiment, explanation has been made with respect to an embossing processing as a surface-roughening processing to be applied to a surface of the mesh body, but the method for surface-roughening is not limited thereto, and as the surface-roughening processing, for example, it is possible to employ at least one of a physical treatment such as a blast processing and a chemical processing using, for example, a solvent.

### REFERENCE SYMBOLS

1: split web
1a: orientation axis
2: main fiber
3: branch fiber
4, 4', 4": layer of first thermoplastic resin
5, 5', 5": layer of second thermoplastic resin
6: slit web
6a: orientation axis
7: uniaxially oriented tape
7a: orientation axis
8: nonwoven fabric
8a: surface-bonded portion
8b: concave portion
9: nonwoven fabric
10: woven fabric
11: main extruder
12: sub extruder
13: multilayer tubular die
14: water-cooled inflation
15: oven
16: splitter
17: heat treatment unit
18: rolled body
21, 22:packing bag
110: split web (longitudinal web)
110a: original cloth roll-out roll
111: width-extending step
112: lamination step
113: thermo-compression bonding step
113a: hot cylinder
113b, 113c: mirror surface roll
114: rolled body
210: split web (lateral web)
210a: original cloth roll-out roll
211: width-extending step
311: main extruder
312: sub extruder
313: multilayer tubular die
314: water-cooled inflation
315: lateral slit step
316: lateral orientation step
317: thermo-compression bonding step
317a: hot cylinder
317b, 317c: mirror surface roll
318: rolled body
410: split web (longitudinal web)
410a: original cloth roll-out roll
411: width-extending step
510: embossing roll
520: rubber roll

## Claims

1. A packing material for packing food products, the packing material formed of a mesh body (8, 9, 10, 114, 318) produced by a method for producing the mesh body (8, 9, 10,114, 318), comprising the steps of:
laminating crosswise or weaving uniaxially oriented bodies (1, 6, 7, 110, 210, 410) made of a thermoplastic resin so that their orientation axes (1a, 6a, 7a) cross each other, and entirely surface-bonding contact portions of adjacent uniaxially oriented bodies (1, 6, 7, 110, 210, 410) via bonding layers (5, 5', 5") thereof to form the mesh body (8, 9, 10, 114, 318); and
applying an embossing processing, which is a surface-roughening processing, to a surface of the mesh body (8, 9,10, 114, 318),
wherein the step of entirely surface-bonding the contact portions of adjacent uniaxially oriented bodies (1, 6, 7, 110, 210, 410) via bonding layers (5, 5', 5") thereof includes feeding uniaxially oriented bodies (1, 6, 7, 110, 210, 410) to be bonded between a hot cylinder (113a, 317a) of which the circumferential surface is a mirror surface and a mirror surface roll (113b, 113c, 317b, 317c), and applying to these uniaxially oriented bodies (1, 6, 7, 110, 210, 410) a nip pressure by the hot cylinder (113a, 317a) and the mirror surface roll (113b, 113c, 317b, 317c),
wherein the step of applying the embossing processing to the surface of the mesh body (8, 9, 10, 114, 318) includes feeding the mesh body (8, 9, 10, 114, 318) between a heated embossing roll (510) having a plurality of circular convex portions on a surface thereof and a rubber roll (520), and applying to the mesh body (8, 9, 10, 114, 318) a nip pressure by the embossing roll (510) and the rubber roll (520), and
wherein the mesh body (8, 9, 10, 114, 318) further comprises:
surface-bonded portions (8a) formed by entirely surface-bonding contact portions of adjacent uniaxially oriented bodies (1, 6, 7, 110, 210, 410) via bonding layers (5, 5', 5") thereof; and
circular concave portions (8b) formed on a surface of the mesh body (8, 9, 10, 114, 318) by the embossing processing.

## Patentansprüche

1. Verpackungsmaterial zum Verpacken von Nahrungsmitteln, wobei das Verpackungsmaterial aus einem Netzkörper (8, 9, 10, 114, 318) gebildet ist, welcher durch ein Verfahren zum Herstellen eines Netzkörpers (8, 9, 10, 114, 318) hergestellt wird, welches die folgenden Schritte umfasst:
kreuzweises Laminieren oder Weben uniaxial orientierter Körper (1, 6, 7, 110, 210, 410), welche aus einem thermoplastischen Kunststoff hergestellt sind, so dass ihre Orientierungsachsen (1a, 6a, 7a) einander kreuzen, und vollständiges Verbinden der Oberflächen von Kontaktabschnitten von angrenzenden uniaxial orientierten Körpern (1, 6, 7, 110, 210, 410) über Verbindungsschichten (5, 5', 5") davon, um den Netzkörper (8, 9, 10, 114, 318) zu bilden; und
Anwenden eines Prägeverfahrens, welches eine Oberflächen-aufrauende Bearbeitung ist, auf einer Oberfläche des Netzkörpers (8, 9, 10, 114, 318),
wobei der Schritt des vollständigen Verbindens der Oberflächen der Kontaktabschnitte von angrenzenden uniaxial orientierten Körpern (1, 6, 7, 110, 210, 410) über Verbindungsschichten (5, 5', 5") davon ein Führen der uniaxial orientierten Körper (1, 6, 7, 110, 210, 410), die zu verbinden sind, zwischen einem heißen Zylinder (113a, 317a), dessen Umfangsoberfläche eine Spiegelfläche ist, und einer Spiegelflächenwalze (113b, 113c, 317b, 317c), und Aufbringen eines Nipdrucks auf diese uniaxial orientierten Körper (1, 6, 7, 110, 210, 410) durch den heißen Zylinder (113a, 317a) und die Spiegelflächenwalze (113b, 113c, 317b, 317c),
wobei der Schritt des Anwendens des Prägeverfahrens auf die Oberfläche des Netzkörpers (8, 9, 10, 114, 318) ein Führen des Netzkörpers (8, 9, 10, 114, 318) zwischen einer erhitzten Prägewalze (510), welche eine Vielzahl von kreisförmigen konvexen Abschnitten auf einer Oberfläche davon aufweist, und einer Gummiwalze (520), und ein Aufbringen eines Nipdrucks auf den Netzkörper (8, 9, 10, 114, 318) durch die Prägewalze (510) und die Gummiwalze (520) umfasst, und
wobei der Netzkörper (8, 9, 10, 114, 318) weiterhin umfasst:
Oberflächen-verbundene Abschnitte (8a), welche gebildet sind durch vollständiges Verbinden der Oberflächen von Kontaktabschnitten von angrenzenden uniaxial orientierten Körpern (1, 6, 7, 110, 210, 410) über Verbindungsschichten (5, 5', 5") davon; und
kreisförmige konkave Abschnitte (8b), welche auf einer Oberfläche des Netzkörpers (8, 9, 10, 114, 318) durch das Prägeverfahren gebildet sind.

## Revendications

1. Matériau d'emballage pour emballer des produits alimentaires, le matériau d'emballage formé d'un corps en maille (8, 9, 10, 114, 318) produit par un procédé de fabrication du corps en maille (8, 9, 10, 114, 318) comprenant les étapes de:
laminer transversalement ou tisser des corps orientés uniaxialement (1, 6, 7, 110, 210, 410) faits d'une résine thermoplastique de sorte que leurs axes d'orientation (1a, 6a, 7a) se croisent, et entièrement coller en surface des parties de contact adjacentes des corps orientés uniaxialement (1, 6, 7, 110, 210, 410) par l'intermédiaire de leurs couches de liaison (5, 5 ', 5' ') pour former le corps de mailles (8, 9, 10, 114, 318); et
appliquer un traitement de gaufrage, qui est un traitement de rugosité de surface, à une surface du corps de maille (8, 9, 10, 114, 318),
dans lequel l'étape consistant à entièrement coller en surface les parties de contact de corps adjacents orientés uniaxialement (1, 6, 7, 110, 210, 410) par de leurs couches de liaison (5, 5 ', 5' ') comprend introduire des corps orientés uniaxialement (1 , 6, 7, 110, 210, 410) à être collés entre un cylindre chaud (113a, 317a) dont la surface circonférentielle est une surface de miroir et un rouleau de surface de miroir (113b, 113c, 317b, 317c), et appliquer à ces corps orientés uniaxialement (1, 6, 7, 110, 210, 410) une pression de pincement par le cylindre chaud (113a, 317a) et le rouleau de surface de miroir (113b, 113c, 317b, 317c),
dans lequel l'étape d'application du traitement de gaufrage à la surface du corps de maille (8, 9, 10, 114, 318) comprend introduire des corps de maille (8, 9, 10, 114, 318) entre un rouleau de gaufrage (510) chauffé ayant une pluralité de parties convexes circulaires sur une surface de celui-ci et un rouleau en caoutchouc (520), et appliquer au corps de maille (8, 9, 10, 114, 318) une pression de pincement par le rouleau de gaufrage et le rouleau en caoutchouc (520), et
le corps de maille (8, 9, 10, 114, 318) comprenant en outre:
des parties à collage de surface (8a) formées par entièrement coller en surface des parties de contact de corps adjacents orientés uniaxialement (1, 6, 7, 110, 210, 410) par l'intermédiaire de couches de liaison (5, 5', 5''); et
des parties concaves circulaires (8b) formées sur une surface du corps de maillage (8, 9, 10, 114, 318) par le traitement de gaufrage.
